# EUROPEAN PATENT APPLICATION

(11) **EP 2 977 200 A1**
(43) Date of publication of application: **27.01.2016**
(21) Application number: 14767941.9
(22) Date of filing: 10.03.2014
(51) Int. Cl.: B32B 15/08, B27D 5/00, B27M 1/08, B27M 3/00, B32B 27/00, B32B 27/12, B32B 27/42

(54) **MELAMINE RESIN METAL DECORATIVE PLATE AND METHOD FOR MANUFACTURING MELAMINE RESIN METAL DECORATIVE PLATE**

(30) Priority: 22.03.2013 JP 2013060498
(71) Applicant: Sumitomo Bakelite Co., Ltd., Shinagawa-ku Tokyo 140-0002 (JP)
(72) Inventor: TAMURA Kosaku, Tokyo 140-0002 (JP)
(74) Representative: Ter Meer Steinmeister & Partner
(86) International application number: PCT/JP2014/056169
(87) International publication number: WO 2014/148295

(57) **Abstract**

A melamine resin metal decorative panel (101) is obtained by sequentially stacking a melamine resin decorative layer (13) including a surface decorative layer (11) and a core layer (12), an adhesive layer (14), and a metal layer (15). The surface decorative layer (11) is formed using a surface decorative layer material (11A) which includes a surface decorative layer substrate obtained by coating at least a first surface which is a design surface with a resin containing a melamine resin, and the core layer (12) is formed using a core layer material (12A) containing a chemical fiber substrate.

## Description

### TECHNICAL FIELD

The present invention relates to a melamine resin metal decorative panel and a method of manufacturing a melamine resin metal decorative panel.

### BACKGROUND ART

Melamine resin decorative panels have been used in various fields, such as for furniture, walls for buildings, and interior materials for vehicles, due to hardness and satisfactory water resistance, stain resistance, and scratch resistance. In a melamine resin decorative panel, a decorative paper coated (impregnated) with a melamine resin is used for a surface decorative layer and a kraft paper coated (impregnated) with a phenolic resin, a glass paper coated with a thermosetting resin and a flame retardant, aluminum, or the like is used for a core layer. There are various combinations of melamine resin decorative panels suitable for various uses. A decorative layer having a melamine resin can be formed on any surface, thereby providing a decorative panel having satisfactory scratch resistance and stain resistance.

For a field which requires incombustibility, such as interior materials for vehicles, there is disclosed a melamine resin metal decorative panel (metal-based melamine resin decorative panel) that is formed by combining a melamine resin decorative layer (melamine resin-impregnated paper) with a metal layer (metal sheet) such as an aluminum sheet (for example, see Patent Document 1).

The melamine resin metal decorative panel has a layer structure in which a resin layer, such as a phenolic resin-impregnated paper and an adhesive-impregnated paper, is disposed between the melamine resin decorative layer (melamine resin-impregnated decorative paper) and the metal layer (metal sheet) such as an aluminum sheet. The melamine resin metal decorative panel has a problem in that since the overall thickness of the melamine resin metal decorative panel becomes thick due to the presence of the resin layer, bending workability is limited. In addition, the melamine resin metal decorative panel has a problem in that warpage easily occurs due to a dimensional change of the resin layer when the panel is subjected to an environmental impact.

### RELATED DOCUMENT

### PATENT DOCUMENT

[Patent Document 1] Japanese Unexamined Patent Publication No. 2002-137327

### SUMMARY OF THE INVENTION

The present invention is to provide an incombustible melamine resin metal decorative panel which is capable of being easily bent outward and suppressing occurrence of warpage after being subjected to an environmental impact while maintaining the surface hardness of the melamine resin decorative panel.

According to the present invention, there is provided a melamine resin metal decorative panel formed by sequentially stacking a melamine resin decorative layer including a surface decorative layer and a core layer, an adhesive layer, and a metal layer, in which the surface decorative layer is formed using a surface decorative layer material which includes a surface decorative layer substrate obtained by coating at least a first surface which is a design surface with a resin containing a melamine resin, and the core layer is formed using a core layer material containing a chemical fiber substrate.

In addition, according to the present invention, there is provided a method of manufacturing a melamine resin metal decorative panel for manufacturing the melamine resin metal decorative panel, the method including: a step of preparing a surface decorative layer material which includes a surface decorative layer substrate obtained by coating at least a first surface which is a design surface with a resin containing a melamine resin; a step of preparing a core layer material containing a chemical fiber substrate; a step of preparing a melamine resin decorative layer material (melamine resin decorative panel) including a surface decorative layer and a core layer by stacking the surface decorative layer material and the core layer material and applying heat and pressure thereto; a step of preparing a metal layer material (metal plate or metal foil) ; and a bonding step of bonding the melamine resin decorative layer material (melamine resin decorative panel) to the metal layer material (metal plate or metal foil) through an adhesive.

According to the present invention, it is possible to obtain an incombustible melamine resin metal decorative panel which is capable of being easily bent outward and suppressing occurrence of warpage after being subjected to an environmental impact while maintaining the surface hardness of the melamine resin decorative panel.

### BRIEF DESCRIPTION OF THE DRAWINGS

The above and other objects, features, and advantages will be more apparent by the preferred embodiments described below and the following drawings associated therewith.

FIG. 1 is a schematic diagram showing an example of the configuration of a melamine resin metal decorative panel according to the present embodiment.
FIG. 2 is a diagram showing an example of a method of manufacturing a melamine resin metal decorative panel according to the present embodiment.

### DESCRIPTION OF EMBODIMENTS

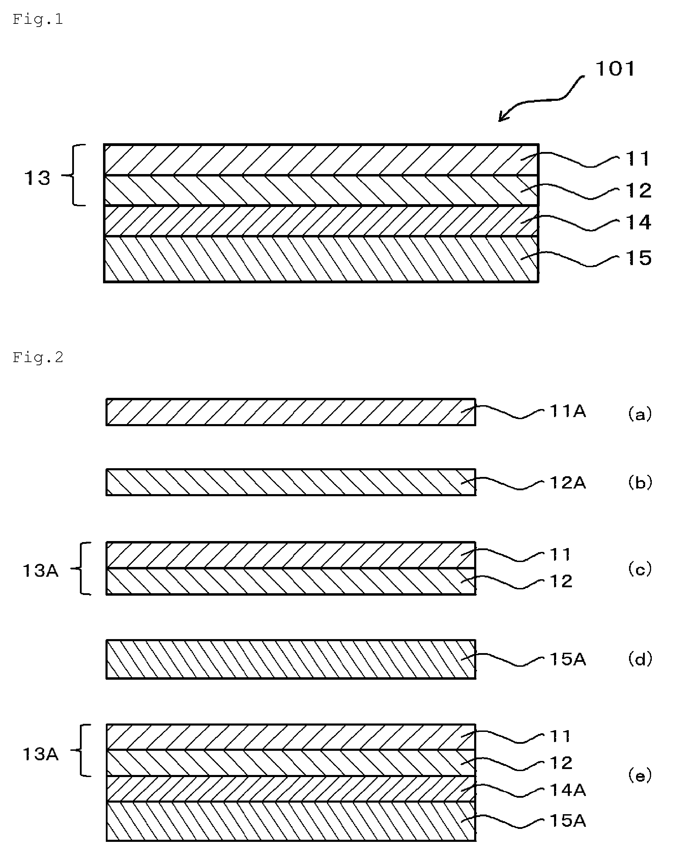

Embodiments of the present invention will be described in detail with reference to the drawings. FIG. 1 is a schematic diagram showing an example of the configuration of a melamine resin metal decorative panel according to the present embodiment. FIG. 2 is a diagram showing an example of a method of manufacturing a melamine resin metal decorative panel according to the present embodiment.

A melamine resin metal decorative panel 101 according to the present embodiment is formed by sequentially stacking a melamine resin decorative layer 13 including a surface decorative layer 11 and a core layer 12; an adhesive layer 14; and a metal layer 15. The surface decorative layer 11 is formed using a surface decorative layer material 11A which contains a surface decorative layer substrate having at least a first surface which is a design surface coated with a resin containing a melamine resin. The core layer 12 is formed using a core layer material 12A containing a chemical fiber substrate.

Accordingly, it is possible to obtain an incombustible melamine resin metal decorative panel which is capable of being easily bent outward and suppressing occurrence of warpage after being subjected to an environmental impact while maintaining the surface hardness of the melamine resin decorative panel.

In addition, a method of manufacturing the melamine resin metal decorative panel 101 according to the present embodiment includes a step of preparing the surface decorative layer material 11A which includes a surface decorative layer substrate obtained by coating at least a first surface which is a design surface with a resin containing a melamine resin (FIG. 2(a)); a step of preparing the core layer material 12A containing a chemical fiber substrate (FIG. 2(b)); a step of preparing a melamine resin decorative layer material (melamine resin decorative panel) 13A including a surface decorative layer 11 and a core layer 12 by stacking the surface decorative layer material 11A and the core layer material 12A and applying heat and pressure thereto (FIG. 2 (c)) ; a step of preparing a metal layer material (metal plate or metal foil) 15A (FIG. 2(d)) ; and a bonding step of bonding the melamine resin decorative layer material (melamine resin decorative panel) 13A to the metal layer material (metal plate or metal foil) 15A through an adhesive 14A (FIG. 2(e)).

### <1. Surface decorative layer>

First, the surface decorative layer 11 constituting the melamine resin metal decorative panel 101 of the present embodiment will be described.

The surface decorative layer 11 is not particularly limited as long as the surface decorative layer 11 is formed using the surface decorative layer material 11A which includes a surface decorative layer substrate obtained by coating at least a first surface which is a design surface with a resin containing a melamine resin.

For example, the surface decorative layer 11 may be formed using the surface decorative layer material 11A which includes a surface decorative layer substrate obtained by coating both the first surface which is the design surface and a second surface contacted with the core layer 12 (that is, the opposite side of the design surface) with the resin containing the melamine resin, using the surface decorative layer material 11A which includes a surface decorative layer substrate obtained by coating the first surface which is the design surface with the resin containing the melamine resin and coating the second surface contacted with the core layer 12 (that is, the opposite side of the design surface) with a resin containing no melamine resin, or the like.

Accordingly, it is possible to impart appropriate surface hardness to the surface and to obtain the melamine resin metal decorative panel 101 which is hardly scratched.

Among these, it is particularly preferable that the surface decorative layer 11 is formed using the surface decorative layer material 11A which contains a surface decorative layer substrate obtained by coating the first surface which is the design surface with the resin containing the melamine resin and coating the second surface contacted with the core layer 12 (that is, the opposite side of the design surface) with a thermoplastic resin. The thermoplastic resin is preferably a thermoplastic resin containing an acrylic resin and a urethane resin. Further, the thermoplastic resin is preferably a solid component of a thermoplastic emulsion.

Accordingly, it is possible to impart flexibility to the surface decorative layer 11 and to improve the outward bending workability of the melamine resin metal decorative panel 101.

The surface decorative layer substrate used for the surface decorative layer material 11A is a substrate in a sheet form having a design surface formed on a first surface thereof, and materials thereof are not particularly limited but may preferably be used pulp, linters, synthetic fibers, glass fibers, or the like. As necessary, a titanium oxide-containing decorative paper which contains a pigment such as titanium oxide or the like may be used.

The basis weight of the surface decorative layer substrate is not particularly limited but is preferably equal to or greater than 40 g/m² and equal to or less than 150 g/m². When the basis weight is less than the lower limit value, a fragment or crease caused by the resin coating (impregnation) process may make it difficult to conduct application processing. In addition, it may be difficult to adjust the amount of coated (impregnated) resin with which the first surface and the second surface are coated (impregnated). Meanwhile, when the basis weight is greater than the upper limit value, the coating (impregnation) properties of the resin with which the surface decorative layer substrate is coated (impregnated) may be non-uniform and the flexibility of the melamine resin metal decorative panel 101 may be reduced. In addition, productivity may be reduced to cause an increase in cost.

The melamine resin used for the surface decorative layer material 11A and contained in the resin applied to at least the first surface which is the design surface of the surface decorative layer substrate is not particularly limited. For example, a melamine resin obtained by reaction of melamine and formaldehyde under a neutral or weak alkaline condition may be used.

The molar ratio of formaldehyde to melamine in the reaction (the value of molar quantity of formaldehyde/molar quantity of melamine, simply referred to as "reaction molar ratio" hereinafter) is not particularly limited but is preferably equal to or higher than 1.0 and equal to or lower than 4.0, more preferably equal to or higher than 1.0 and equal to or lower than 2.0, and even more preferably equal to or higher than 1.1 and equal to or lower than 1.8. When the reaction molar ratio is less than the lower limit value, the number of unreacted components may increase to cause a reduction in preservability or an increase in cost. Further, when the reaction molar ratio is higher than the upper limit value, the flexibility of the resin after curing may be reduced. In addition, as the melamine resin, one kind of melamine resin may be used alone, or two or more kinds of melamine resins having different reaction molar ratios and different weight average molecular weights may be used in combination. Moreover, as the melamine resin, commercially available melamine resins, such as melamine resins manufactured by Sumitomo Chemical Co., Ltd., may be used.

The weight average molecular weight of the melamine resin is not particularly limited but is preferably equal to or greater than 200 and equal to or less than 500, and particularly preferably equal to or greater than 250 and equal to or less than 350. When the weight average molecular weight is less than the lower limit value, unreacted components may increase to reduce preservability. In addition, when the weight average molecular weight is greater than the upper limit value, impregnation properties of the substrate may be reduced. Further, the weight average molecular weight may be measured by, for example, gel permeation chromatography (GPC) (standard material: polyethylene conversion).

The amount (content) of the coated (impregnated) melamine resin in the resin with which the first surface of the surface decorative layer material 11A is coated (impregnated) is not particularly limited but is preferably equal to or greater than 80% by mass and equal to or less than 100% by mass, and particularly preferably equal to or greater than 95% by mass and equal to or less than 100% by mass. When the content of the melamine resin is less than the lower limit value, the surface hardness or stain resistance may be reduced.

A method of coating the first surface of the surface decorative layer substrate with the resin containing the melamine resin is not particularly limited. There may be used a method in which the surface decorative layer substrate is coated with a resin varnish obtained by dissolving the resin in a solvent using a known device, for example, a spraying device, a shower device, a kiss coater, a comma coater, or the like, and is subjected to heating and drying at equal to or higher than approximately 80°C and equal to or lower than approximately 130°C.

It is preferable that the resin-impregnated paper obtained after heating and drying has a remaining volatile component (solvent) of equal to or greater than 2% by mass and equal to less than 6% by mass based on 100% by mass of the total weight of the resin-impregnated paper. Accordingly, the resin-impregnated paper is easy to handle, and the resin flow of the melamine resin with which the first surface is coated is improved in heat forming, so that the designed appearance and surface gloss of the decorative panel become satisfactory.

When the amount of the volatile component is less than the lower limit, the resin-impregnated paper may easily be damaged and be difficult to handle. In addition, the resin flow may be reduced and the volatile component may cause problems in the formation of an appearance. Further, when the amount of the volatile component is greater than the upper limit value, warpage (sheet curl) is likely to increase in the decorative panel under drying conditions after forming. When the amount of the volatile component is further increased to exceed 7.5% by mass, gloss transfer properties in the appearance of the decorative panel may also be affected.

The solvent which dissolves the resin containing the melamine resin is not particularly limited and examples thereof include water, methanol, or the like. Among these, water is preferable. In addition, a poor solvent may be used within a range in which adverse effects do not appear. The content of solid components (all components other than the solvent) in the resin varnish is not particularly limited but is preferably equal to or greater than 30% by mass and equal to or less than 70% by mass, and particularly preferably equal to or greater than 45% by mass and equal to or less than 60% by mass in the resin varnish. Accordingly, the coating (impregnation) properties of the resin varnish to the surface decorative layer substrate may be improved.

Regarding the surface decorative layer material 11A of the present embodiment, the second surface of the surface decorative layer substrate contacted with the core layer 12 (that is, the opposite side of the design surface) is obtained by coating, preferably with a thermoplastic resin, and more preferably a solid component of a thermoplastic emulsion resin. Further, in the present embodiment, the thermoplastic emulsion resin refers to a thermoplastic resin which is dispersed in a solvent in an emulsion state. In addition, the solid component of the thermoplastic emulsion resin refers to a component obtained by removing the solvent from the thermoplastic emulsion resin.

The thermoplastic resin has adhesive properties to metals and various materials and is capable of imparting flexibility to the surface decorative layer material 11A. As a result, due to the second surface coated with the thermoplastic resin, it is possible to improve adhesive strength between the surface decorative layer 11 and the core layer 12 and to obtain an effect of improving the bending workability of the melamine resin metal decorative panel.

The thermoplastic resin is not particularly limited and examples thereof include an acrylic resin, a urethane resin, a vinyl acetate-based copolymer, urethane-acrylic composite particles, styrene butadiene rubber (SBR), nitrile rubber (NBR), or the like. As the thermoplastic resin, one kind among these may be used alone or two different kinds or more of thermoplastic resins may be used as a mixture.

Among these, the thermoplastic resin is preferably a thermoplastic resin containing an acrylic resin and a urethane resin.

In the present embodiment, when a thermosetting resin is used, it is possible to achieve an appropriate adhesive strength to the core layer 12.

Moreover, the urethane resin is excellent particularly in toughness, elasticity, and flexibility, and the acrylic resin is excellent particularly in transparency, durability, weather resistance, chemical resistance, and film formation properties.

The solid component of the thermoplastic emulsion resin is not particularly limited and examples thereof include emulsion particles of thermoplastic resins such as an acrylic resin, a urethane resin, a vinyl acetate-based copolymer, urethane-acrylic composite particles, styrene butadiene rubber (SBR), nitrile rubber (NBR), or the like. Among these, urethane-acrylic composite particles are preferable.

In the present embodiment, the urethane-acrylic composite particles refer to those having a hetero-phase structure of an acrylic resin and a urethane resin in a single particle. Since the urethane resin and the acrylic resin each have high adhesive strength to the core layer 12, it is possible to realize further enhanced adhesive strength to the core layer 12 by using the urethane-acrylic composite particles.

In addition, the urethane resin is excellent particularly in toughness, elasticity, and flexibility, and the acrylic resin is excellent particularly in transparency, durability, weather resistance, chemical resistance, and film formation properties. Also, in the present embodiment, a "hetero-phase structure" refers to a structure in which a plurality of phases resulting from different kinds of resins is present in one particle, for example, a core-shell structure, a localized structure, a sea-island structure, or the like.

Further, the arranged state of the urethane-acrylic composite particles at the time when the second surface of the surface decorative layer material 11A is coated with the particles is not particularly limited and may be, for example, a straight chain structure or the like. The structure of the particles and the arrangement of the particles may be identified by, for example, a scanning electron microscope (SEM).

Among these, the urethane-acrylic composite particles are particularly preferably an aqueous clear type having a core-shell structure which includes an acrylic component as a core and a urethane component as a shell. When the urethane-acrylic composite particles have the core-shell structure, in coating the second surface of the surface decorative layer material 11A, the outside surface has a urethane composition, and thus the second surface of surface decorative layer material 11A has properties of both of the urethane resin and the acrylic resin and the outside has the properties of the urethane resin.

Further, in the present invention, "aqueous clear" refers to a resin aqueous solution in which a resin liquid is water-soluble and a coating film obtained by dehydration is water-insoluble and which has transparency enough that the base color and pattern are clearly identified. When the resin with which the second surface of the surface decorative layer material 11A is coated is the aqueous clear type, it is possible to suppress the influence on the color tone of the design surface of the surface decorative layer 11.

As the solid component of the thermoplastic emulsion resin, one kind among the foregoing materials may be used alone or two or more different kinds of thermoplastic resins may be used as a mixture. In addition to the foregoing emulsion particles of thermoplastic resins, if necessary, a small amount of a thickener, a penetration accelerator, a deformer, or the like may be added into the solid component of the thermoplastic emulsion resin.

The solid component of the thermoplastic emulsion resin preferably contains the emulsion resin particles having an average particle diameter of equal to or larger than 30 nm and equal to or smaller than 100 nm, and the emulsion resin particles have an average particle diameter of particularly preferably equal to or larger than 60 nm and equal to or smaller than 90 nm. Accordingly, the coating (impregnation) properties between the fibers of the surface decorative layer substrate may be improved, so that the inside of the surface decorative layer substrate is coated (impregnated), making it possible to impart satisfactory flexibility to the surface decorative layer material 11A.

Further, the solid component of the thermoplastic emulsion resin is preferably water-insoluble. Accordingly, the solid component of the thermoplastic emulsion resin is transferred to the first surface of the surface decorative layer material 11A and mixed with the melamine resin applied to the first surface, thereby preventing deterioration in properties of the surface by the melamine resin on the first surface.

A method of coating the second surface of the surface decorative layer substrate with the solid component of the thermoplastic emulsion resin is not particularly limited and may be the same as the foregoing method of coating the first surface of the surface decorative layer substrate with the resin containing the melamine resin. That is, a method of applying, and heating and drying the thermoplastic emulsion resin dissolved in the solvent in the emulsion state may be used.

In the resin-impregnated paper obtained after heating and drying, a volatile component remains in an amount of preferably equal to or greater than 2% by mass and equal to or less than 6% by mass based on 100% by mass of the total weight of the resin-impregnated paper. Accordingly, the resin-impregnated paper is easy to handle, and the resin flow of the melamine resin with which the first surface is coated is improved in heat forming, so that the design appearance and surface gloss of the decorative panel become satisfactory.

The solvent used for the thermoplastic emulsion resin is not particularly limited and examples thereof include water or the like. In addition, a poor solvent may be used within a range in which adverse effects do not appear. The content of solid components (all components other than the solvent) in the thermoplastic emulsion resin is not particularly limited but is preferably equal to or greater than 25% by mass and equal to or less than 60% by mass, and particularly preferably equal to or greater than 30% by mass and equal to or less than 45% by mass in the thermoplastic emulsion resin. Accordingly, the coating (impregnation) properties of the thermoplastic emulsion resin to the surface decorative layer substrate may be improved.

### <2. Core layer>

Next, the core layer 12 constituting the melamine resin metal decorative panel 101 of the present embodiment will be described.

The core layer 12 is not particularly limited as long as the core layer is formed using the core layer material 12A containing the chemical fiber substrate. For example, the core layer 12 may include core layers obtained using a chemical fiber substrate as the core layer material 12A or using a chemical fiber substrate coated with a resin as the core layer material 12A.

Accordingly, it is possible to impart flexibility to the core layer 12 and to obtain an effect of improving the outward bending workability of the melamine resin metal decorative panel 101. Further, it is possible to reduce the content of the resin in the core layer 12 and the melamine resin decorative layer and to obtain an effect of suppressing occurrence of warpage of the melamine resin metal decorative panel 101 after the panel is subjected to an environmental impact. In addition, it is possible to obtain an effect of improving the heat resistance, incombustibility, and rigidity of the melamine resin metal decorative panel 101.

As the core layer 12, a structure of a single layer or two or more layers formed using the core layer material 12A may be used, but a single layer is preferable. Accordingly, it is possible to obtain an excellent balance between the adhesive strength between the second surface of the surface decorative layer 11 and the core layer 12 and the effect of suppressing occurrence of warpage of the melamine resin metal decorative panel 101 after the panel is subjected to an environmental impact.

Materials of the chemical fiber substrate available for the core layer 12 are not particularly limited and examples thereof include a synthetic fiber, a semisynthetic fiber, a recycled fiber, an inorganic fiber, or the like. More specifically, examples of the materials may include a polybenzoxazole resin fiber, a polyamide resin fiber, an aromatic polyamide resin fiber, a polyamide-base resin fiber such as all aromatic polyamide (aramid) resin fibers, a polyester-based resin fiber such as a polyester resin fiber, an aromatic polyester resin fiber, all aromatic polyester resin fibers, a polyimide resin fiber, a fluorine resin fiber, a glass fiber, a carbon fiber, a ceramic fiber, a metal fiber (stainless steel fiber), or the like. Accordingly, the hygroscopicity of the core layer 12 and the melamine resin decorative layer 13 may be reduced. Among the foregoing examples, a glass fiber substrate is particularly preferably used in view of incombustibility, strength, and low hygroscopicity.

The glass fiber substrate is not particularly limited and examples thereof include a woven glass fiber fabric, a non-woven glass fiber fabric, or the like. Among these, a woven glass fiber fabric is preferable in view of incombustibility and strength. In addition, glass materials constituting the woven glass fiber fabric are not particularly limited and examples thereof include E glass, C glass, A glass, S glass, D glass, NE glass, T glass, H glass, or the like. Among these, T glass is preferable. Accordingly, it is possible to reduce the coefficient of thermal expansion of the woven glass fabric and to obtain an effect of suppressing occurrence of warpage of the melamine resin metal decorative panel 101 after the panel is subjected to an environmental impact.

Although the weight of the chemical fiber substrate is not particularly limited, the chemical fiber substrate preferably has a basis weight of equal to or greater than 100 g/m² when it is necessary to satisfy "Materials should not have cracks and penetration after combusted" under the requirements for incombustibility stipulated in Article No. 2(9) of the Building Standard Law in Japan. In addition, although it is not necessary that the upper limit of the weight is particularly limited, the chemical fiber substrate preferably has a basis weight of equal to or less than 250 g/m² in view of material costs and processability.

When the chemical fiber substrate coated with the resin is used for the core layer material 12A, although not particularly limited, for example, a chemical fiber substrate coated (impregnated) with a resin composition containing a thermoplastic resin, a thermosetting resin, or the like may be used. The resin composition is not particularly limited as long as the adhesive strength between the second surface of the surface decorative layer 11 and the core layer 12 is sufficient to form the melamine resin metal decorative panel 101.

When a thermoplastic resin is used as the resin with which the chemical fiber substrate is coated, the content of the solid component of the thermoplastic resin is preferably equal to or greater than 1% by mass and equal to or less than 20% by mass, and particularly preferably equal to or greater than 1% by mass and equal to or less than 10% by mass. Accordingly, it is possible to improve the adhesive strength between the second surface of the surface decorative layer 11 and the core layer 12.

The thermoplastic resin is not particularly limited and examples thereof include an acrylic resin, a urethane resin, an ethylene vinyl acetate resin, styrene butadiene rubber (SBR), or the like. Among these, an acrylic resin and a urethane resin are preferable, and a thermoplastic resin containing an acrylic resin and a urethane resin is particularly preferable.

When a thermosetting resin is used as the resin with which the chemical fiber substrate is coated, the content of the solid component of the thermosetting resin is preferably equal to or greater than 1% by mass and equal to or less than 20% by mass, and particularly preferably equal to or greater than 2% by mass and equal to or less than 10% by mass. Accordingly, it is possible to improve the adhesive strength between the second surface of the surface decorative layer 11 and the core layer 12 without reducing the high incombustibility and bending workability of the melamine resin metal decorative panel 101.

The thermosetting resin is not particularly limited and examples thereof include a phenolic resin, an epoxy resin, an oxetane resin, a (meth)acrylate resin, an unsaturated polyester resin, a diallyl phthalate resin, a urea resin, a maleimide resin, or the like. Among these, a phenolic resin is preferable in view of incombustibility, heat resistance, and adhesion.

A method of coating a chemical fiber substrate with the solid component of a resin is not particularly limited and examples thereof include a method of applying, and heating and drying a resin dissolved in a solvent. In the core layer material 12A (core layer substrate coated with the resin) after heating and drying, a volatile component preferably remains in an amount of equal to or greater than 1% by mass and equal to or less than 6% by mass based on 100% by mass of the total weight of the core layer material.

The solvent used for dissolving the resin is not particularly limited and examples thereof include methanol. A method of applying a coating solution may be used, the coating solution being obtained by diluting the resin 5 to 14 times to adjust the solid content of varnish to equal to or greater than 3% by mass and equal to or less than 10% by mass. Accordingly, the coating (impregnation) properties of the resin to the chemical fiber substrate may be improved.

The thickness of the core layer 12 is preferably equal to or greater than 0.1 mm. Accordingly, the heat resistance and the incombustibility of the melamine resin metal decorative panel 101 may be improved.

The upper limit of the thickness is not particularly limited. However, as the thickness of the core layer increases, the thickness and the weight of the melamine resin metal decorative panel 101 also increase along with an increase in cost. Thus, the thickness of the core layer is preferably set within an allowable range in design of the final product, and is preferably equal to or less than 0.35 mm.

### <3. Melamine resin decorative layer>

Next, the melamine resin decorative layer 13 constituting the melamine resin metal decorative panel 101 of the present embodiment will be described.

The melamine resin decorative layer 13 includes the surface decorative layer 11 and the core layer 12 described above. For example, the melamine resin decorative layer 13 may be formed using the melamine resin decorative layer material (melamine resin decorative panel) 13A obtained by stacking the surface decorative layer material 11A and the core layer material 12A, followed by forming by heating and pressing.

Heating and pressing conditions for forming the melamine resin decorative layer material (melamine resin decorative panel) 13A are not particularly limited. For example, heating and pressing may be carried out at a temperature of 130°C to 150°C and pressure of 2 MPa to 8 MPa for 3 minutes to 60 minutes. In forming by heating and pressing, the first surface of the surface decorative layer material 11A may be subjected to specular finishing by stacking a specular finishing plate thereon, and to embossing finishing by stacking an embossing plate or embossing film thereon.

The thickness of the melamine resin decorative layer 13 is not particularly limited but is preferably equal to or less than 0.4 mm. Accordingly, the content of the resin component in the entire melamine resin metal decorative panel 101 may be equal to or less than a certain amount, and it is possible to obtain an effect of suppressing occurrence of warpage of the melamine resin metal decorative panel 101 after the panel is subjected to an environmental impact. In addition, it is possible to obtain an effect of improving the heat resistance, incombustibility, and rigidity of the melamine resin metal decorative panel 101.

The lower limit of the thickness of the melamine resin decorative layer is not particularly limited but is preferably equal to or greater than 0.08 mm in view of the strength of the decorative panel.

### <4. Metal layer>

Next, the metal layer 15 constituting the melamine resin metal decorative panel 101 of the present embodiment will be described.

Metal layer materials constituting the metal layer 15 are not particularly limited and examples thereof include aluminum, copper, stainless steel, or the like. Among these, one kind of metal may be used alone or an alloy of two or more kinds of metals may be used. Among these, a metal material containing aluminum is preferable in view of extensive use, stability over time, cost, or the like. In addition, regarding the form of the metal layer 15, a metal plate, a metal foil, or the like may be used.

The thickness of the metal layer 15 is not particularly limited but is preferably equal to or greater than 55% of the thickness of the entire melamine resin metal decorative panel 101. Accordingly, it is possible to obtain an effect of suppressing occurrence of warpage of the melamine resin metal decorative panel 101 after the panel is subjected to an environmental impact.

Also, it is possible to obtain an effect of improving the heat resistance, incombustibility, rigidity, or the like of the melamine resin metal decorative panel 101. The thickness of the metal layer 15 is not particularly limited but is preferably equal to or less than 3 mm, and more preferably equal to or less than 2 mm. When the thickness is greater than the upper limit value, the flexibility of the melamine resin metal decorative panel 101 is reduced and the outward bending of the melamine resin metal decorative panel 101 tends to be difficult.

The thickness of the metal layer 15 is not particularly limited but is preferably equal to or greater than 0.3 mm. Accordingly, it is possible to impart satisfactory incombustibility to the melamine resin metal decorative panel 101 and to improve the mechanical strength of the melamine resin metal decorative panel 101. When the thickness is less than the lower limit value, handling properties may be reduced when the adhesive 14A is applied onto the metal layer material (metal plate or metal foil) 15A.

### <5. Adhesive layer>

Next, the adhesive layer 14 constituting the melamine resin metal decorative panel 101 of the present embodiment will be described.

The adhesive 14A constituting the adhesive layer 14 is not particularly limited and examples thereof include an epoxy resin-based adhesive, an acrylic resin-base adhesive, a urethane resin-based adhesive, a synthetic rubber-based adhesive, an ethylene-vinyl acetate copolymer-based adhesive, a polyolefin-based adhesive, a polyamide-based adhesive, or the like. Accordingly, it is possible to improve the adhesive strength between the core layer 12 of the melamine resin decorative layer 13 and the metal layer 15.

Among these adhesives 14A, a urethane resin-based adhesive is preferable, and a urethane resin-based reactive hot melt adhesive is particularly preferable. Accordingly, it is possible to impart flexibility to the melamine resin metal decorative panel 101 and to improve outward bending workability of the melamine resin metal decorative panel 101.

The properties of the adhesive 14A are not particularly limited and the adhesive, for example, in a liquid form, a semisolid form, a film form, or the like may be used.

### <Method of manufacturing melamine resin metal decorative panel>

As described above, a method of manufacturing a melamine resin metal decorative panel 101 according to the present embodiment includes a step of preparing a surface decorative layer material 11A which includes a surface decorative layer substrate obtained by coating at least a first surface which is a design surface with a resin containing a melamine resin (FIG. 2(a)) ; a step of preparing a core layer material 12A containing a chemical fiber substrate (FIG. 2(b)) ; a step of preparing a melamine resin decorative layer material (melamine resin decorative panel) 13A including a surface decorative layer 11 and a core layer 12 by stacking the surface decorative layer material 11A and the core layer material 12A and applying heat and pressure thereto (FIG. 2 (c)) ; a step of preparing a metal layer material (metal plate or metal foil) 15A (FIG. 2(d)) ; and a bonding step of bonding the melamine resin decorative layer material (melamine resin decorative panel) 13A to the metal layer material (metal plate or metal foil) 15A through an adhesive 14A (FIG. 2(e)).

A method of preparing the surface decorative layer material 11A which includes the surface decorative layer substrate obtained by coating at least the first surface which is the design surface with the resin containing the melamine resin is not particularly limited. A method in which a surface decorative layer substrate is coated with a resin varnish obtained by dissolving the resin in a solvent using a known device, for example, a spraying device, a shower device, a kiss coater, a comma coater, or the like, and is subjected to heating and drying at equal to or higher than approximately 80°C and equal to or lower than approximately 130°C is exemplified.

A method of preparing the core layer material 12A containing the chemical fiber substrate is not particularly limited. For example, there are methods of using a chemical fiber substrate as it is or coating a chemical fiber substrate with the solid component of a resin, so that the chemical fiber substrate being obtained by applying a resin dissolved in a solvent to a chemical fiber and heating and drying the chemical fiber.

A method of preparing the melamine resin decorative layer material (melamine resin decorative panel) 13A is not particularly limited. For example, there is a method in which a surface decorative layer material 11A and a core layer material 12A are stacked and formed by heating and pressing at a temperature of 130°C to 150°C and pressure of 2 MPa to 8 MPa for approximately 3 minutes to 60 minutes.

A method of bonding the melamine resin decorative layer material (melamine resin decorative panel) 13A to the metal layer material (metal plate or metal foil) 15A through the adhesive 14A is not particularly limited. For example, there may be used a method of applying an adhesive 14A in a liquid or semisolid form onto a metal layer material (metal plate or metal foil) 15A and pressing the metal layer material at 0.1 MPa to 0.5 MPa using a cold press or roll press or a method of attaching an adhesive 14A in a film form to a metal layer material (metal plate or metal foil) 15A and pressing the metal layer material at 0.1 MPa to 0.5 MPa using a hot press.

The method of applying an adhesive 14A in a liquid or semisolid form onto a metal layer material (metal plate or metal foil) is not particularly limited but is preferably performed using a roll coater capable of raising the temperature.

In order to improve adhesive strength, the adherend surface of the metal layer material (metal plate or metal foil) 15A may be subjected in advance to a primer treatment, a metal layer corrosion treatment, a sanding treatment, or the like.

### EXAMPLES

Hereinafter, the present invention will be described in detail with reference to examples and comparative examples, but the present invention is not limited thereto.

### (Example 1)

### <Manufacture of surface decorative layer material>

As a surface decorative layer substrate, a titanium oxide-containing decorative paper having a basis weight of 80 g/m² was used. A melamine resin (reaction molar ratio: 1.4, solid content of resin: 50% by weight) was applied with a solid content of 50 g/m² to a first surface (design surface) of the surface decorative layer substrate, and an aqueous clear containing a urethane-acrylic resin emulsion (SU-100 manufactured by Chirika Co., Ltd., average particle diameter: 84 nm) was applied with a solid content of 40 g/m² to a second surface.

### <Manufacture of core layer material>

As a core layer substrate, a woven glass fiber fabric having a basis weight of 104 g/m² (Nanya-2116 manufactured by Taiwan Nanya Plastics Corporation) was used. To the core layer substrate was applied a solvent obtained by diluting an aqueous clear containing a urethane-acrylic resin emulsion (SU-100 manufactured by Chirika Co., Ltd., average particle diameter: 84 nm) 10 times with methanol as a solvent. Subsequently, the core layer substrate was dried for 90 seconds in a hot air drier at 120°C. Accordingly, a core layer material in which 1% by mass of the urethane-acrylic resin remained based on 100% by mass of the total weight of the core layer material after heat-drying was obtained.

### <Manufacture of melamine resin decorative layer material (melamine resin decorative panel)>

The obtained core layer material was stacked into a single layer on a second surface of the obtained surface decorative layer material and was subjected to forming by heating and pressing at 140°C and 8 MPa for 40 minutes. Accordingly, a melamine resin decorative layer material (melamine resin decorative panel) with a thickness of 0.2 mm was obtained.

### <Preparation of metal layer material (metal plate or metal foil)>

As a metal layer material, an aluminum plate with a thickness of 1.0 mm (A3003P H16 defined in JIS H4000, a product having one sanded surface) was prepared.

### <Manufacture of melamine resin metal decorative panel>

Using a roll coater, a urethane resin-based reactive hot melt adhesive (H-830 manufactured by DIC Corporation) was applied to the prepared metal layer material at 60 g/m² at a rolling temperature of 120°C. Subsequently, the metal layer material was stacked such that the adhesive was in contact with the surface of the core layer material of the obtained melamine resin decorative layer material (melamine resin decorative panel), and was subjected to pressing at a pressure of 0.2 MPa using a roll press. Accordingly, a melamine resin metal decorative panel with a thickness of 1.2 mm was obtained.

### (Example 2)

A melamine resin decorative layer material (melamine resin decorative panel) with a thickness of 0.3 mm was obtained in the same manner as in Example 1 except that the core layer material was stacked into two layers on the second surface of the obtained surface decorative layer material in the process of manufacturing the melamine resin decorative layer material (melamine resin decorative panel). Subsequently, a melamine resin metal decorative panel with a thickness of 1.3 mm was obtained in the same manner as in Example 1.

### (Example 3)

A melamine resin decorative layer material (melamine resin decorative panel) with a thickness of 0.2 mm was obtained in the same manner as in Example 1 except that a woven glass fiber fabric having a basis weight of 104 g/m² (Nanya-2116 manufactured by Taiwan Nanya Plastics Corporation) as a core layer substrate was used as it is as a core layer material. Subsequently, a melamine resin metal decorative panel with a thickness of 1.2 mm was obtained in the same manner as in Example 1.

### (Example 4)

A melamine resin metal decorative panel with a thickness of 1.2 mm was obtained in the same manner as in Example 1 except that the metal layer material was coated at 60 g/m² with a urethane resin-based adhesive (GA-190 manufactured by SUNBAKE Co., Ltd.) using a roll coater, was stacked such that the adhesive was in contact with the surface of the core layer material of the melamine resin decorative layer material (melamine resin decorative panel), and was subjected to pressing using a cold press at a pressure of 0.2 MPa for 8 hours or longer in the process of manufacturing the melamine resin metal decorative panel.

### (Example 5)

### <Manufacture of surface decorative layer material>

As a surface decorative layer substrate, a titanium oxide-containing decorative paper having a basis weight of 80 g/m² was used. A melamine resin (reaction molar ratio: 1.4, solid content of resin: 50% by weight) was applied with a solid content of 55 g/m² each, 110 g/m² in total, to a first surface and a second surface of the surface decorative layer substrate.

### <Manufacture of core layer material>

As a core layer substrate, a woven glass fiber fabric having a basis weight of 104 g/m² (Nanya-2116 manufactured by Taiwan Nanya Plastics Corporation) was used. To the core layer substrate was applied a solvent obtained by diluting a phenolic resin (PR-204G manufactured by Sumitomo Bakelite Co., Ltd.) 10 times with methanol as a solvent. Subsequently, the core layer substrate was dried for 90 seconds in a hot air drier at 120°C. Accordingly, a core layer material in which 3% by mass of the phenolic resin remained based on 100% by mass of the total weight of the core layer material after heat-drying was obtained.

### <Manufacture of melamine resin decorative layer material (melamine resin decorative panel)>

The obtained core layer material was stacked into a single layer on a second surface of the obtained surface decorative layer material and was subjected to forming by heating and pressing at 140°C and 8 MPa for 40 minutes. Accordingly, a melamine resin decorative layer material (melamine resin decorative panel) with a thickness of 0.2 mm was obtained.

### <Preparation of metal layer material (metal plate or metal foil)>

As a metal layer material, an aluminum plate with a thickness of 1.0 mm (A3003P H16 defined in JIS H4000, a product having one sanding-treated surface) was prepared.

### <Manufacture of melamine resin metal decorative panel>

Using a roll coater, a urethane resin-based reactive hot melt adhesive (H-830 manufactured by DIC Corporation) was applied to the prepared metal layer material at 60 g/m² and a rolling temperature of 120°C. Subsequently, the metal layer material was stacked such that the adhesive was in contact with the surface of the core layer material of the obtained melamine resin decorative layer material (melamine resin decorative panel), and was subjected to pressing at a pressure of 0.2 MPa using a roll press. Accordingly, a melamine resin metal decorative panel with a thickness of 1.2 mm was obtained.

### (Example 6)

A melamine resin decorative layer material (melamine resin decorative panel) with a thickness of 0.1 mm was obtained in the same manner as Example 1 except that an unwoven glass fiber fabric having a basis weight of 50 g/m² (SAS-050 manufactured by Oribest Co., Ltd.) was used as a core layer substrate instead of a woven glass fiber fabric having a basis weight of 104 g/m² (Nanya-2116 manufactured by Taiwan Nanya Plastics Corporation). Subsequently, a melamine resin metal decorative panel with a thickness of 1.1 mm was obtained in the same manner as in Example 1.

### (Comparative Example 1)

### <Manufacture of surface decorative layer material>

As a surface decorative layer substrate, a titanium oxide-containing decorative paper having a basis weight of 80 g/m² was used. A melamine resin (reaction molar ratio: 1.4, solid content of resin: 50% by weight) was applied with a solid content of 55 g/m² each, 110 g/m² in total, to a first surface and a second surface of the surface decorative layer substrate.

### <Manufacture of core layer material>

Core layer material 1 with a resin amount of 30% and a volatile component content of 7% (phenolic resin-impregnated paper 1) was obtained by impregnating an unbleached kraft paper having a basis weight of 190 g/m² as core layer substrate 1 with a phenolic resin varnish for impregnation and heat-drying the unbleached kraft paper, the phenolic resin varnish for impregnation being obtained by adjusting, using methanol, a water-soluble phenolic resin with a molar ratio of formaldehyde to phenol of 1.3 and a viscosity of 38 cps/20°C to have a viscosity of 19 cps/34°C.

Further, core layer material 2 with a resin amount of 48% and a volatile component content of 5% (phenolic resin-impregnated paper 2) was obtained by impregnating an unbleached kraft paper having a basis weight of 145 g/m² as core layer substrate 2 with a phenolic resin varnish for impregnation and heat-drying the unbleached kraft paper, the phenolic resin varnish for impregnation being obtained by acquiring a phenolic resin varnish in a dehydration-concentrated type having a viscosity of 120 cps/20°C via emulsification at a molar ratio of formaldehyde to phenol of 1.2 and adjusting, using a methanol, the viscosity of the phenolic resin varnish to be a viscosity of 27 cps/35°C.

### <Preparation of metal layer material (metal plate or metal foil)>

As a metal layer material, an aluminum plate with a thickness of 1.0 mm (A3003P H16 defined in JIS H4000, a product having one sanding-treated surface) was prepared.

### <Manufacture of melamine resin metal decorative panel>

The obtained core layer material 1 and core layer material 2 were sequentially stacked into each single layer on a second surface of the obtained surface decorative layer material, after which the prepared metal layer material was stacked thereon to be in contact with the surface of the core layer material 2 and was subjected to forming by heating and pressing at 140°C and 8 MPa for 40 minutes, thereby obtaining a melamine resin metal decorative panel with a thickness of 1.4 mm.

### (Comparative Example 2)

### <Manufacture of surface decorative layer material>

As a surface decorative layer substrate, a titanium oxide-containing decorative paper having a basis weight of 80 g/m² was used. A melamine resin (reaction molar ratio: 1.4, solid content of resin: 50% by weight) was applied with a solid content of 55 g/m² each, 110 g/m² in total, to a first surface and a second surface of the surface decorative layer substrate.

### <Manufacture of core layer material>

As core layer substrate 1, an unbleached kraft paper having a basis weight of 190 g/m² was used. Core layer substrate 1 was impregnated with a phenolic resin varnish for impregnation and was subjected to heat-drying, the phenolic resin varnish for impregnation being obtained by adjusting, using a methanol, a water-soluble phenolic resin with a molar ratio of formaldehyde to phenol of 1.3 and a viscosity of 38 cps/20°C to have a viscosity of 19 cps/34°C. Accordingly, core layer material 1 with a resin amount of 30% and a volatile component content of 7% (phenolic resin-impregnated paper 1) was obtained.

Subsequently, a phenolic resin varnish for impregnation was prepared by acquiring a phenolic resin varnish in a dehydration-concentrated type having a viscosity of 120 cps/20°C via emulsification at a molar ratio of formaldehyde to phenol of 1.2 and adjusting, using a methanol, the viscosity of the phenolic resin varnish to be a viscosity of 27 cps/35°C.

In addition, as core layer substrate 2, an unbleached kraft paper having a basis weight of 145 g/m² was used. Core layer substrate 2 was impregnated with the phenolic resin varnish for impregnation and was subjected to heat-drying. Accordingly, core layer material 2 with a resin amount of 48% and a volatile component content of 5% (phenolic resin-impregnated paper 2) was obtained.

### <Manufacture of melamine resin decorative layer material (melamine resin decorative panel)>

The obtained core layer material 1 and core layer material 2 were sequentially stacked into each single layer on a second surface of the obtained surface decorative layer material and were subjected to forming by heating and pressing at 140°C and 8 MPa for 40 minutes. Accordingly, a melamine resin decorative layer material (melamine resin decorative panel) with a thickness of 0.4 mm was obtained.

### <Preparation of metal layer material (metal plate or metal foil)>

As a metal layer material, an aluminum plate with a thickness of 1.0 mm (A3003P H16 defined in JIS H4000, a product having one sanding-treated surface) was prepared.

### <Manufacture of melamine resin metal decorative panel>

Using a roll coater, a urethane resin-based reactive hot melt adhesive (H-830 manufactured by DIC Corporation) was applied to the prepared metal layer material at 60 g/m² and a rolling temperature of 120°C. Subsequently, the metal layer material was stacked such that the adhesive was in contact with the surface of the core layer material of the obtained melamine resin decorative layer material (melamine resin decorative panel), and was subjected to pressing at a pressure of 0.2 MPa using a roll press. Accordingly, a melamine resin metal decorative panel with a thickness of 1.4 mm was obtained.

### (Comparative Example 3)

A melamine resin decorative layer material with a thickness of 0.1 mm (melamine resin decorative panel) was obtained, without using a core layer material, by forming only a surface decorative layer material by heating and pressing at 140°C and 8 MPa for 40 minutes in the process of manufacturing the melamine resin decorative layer material (melamine resin decorative panel). Subsequently, a melamine resin metal decorative panel with a thickness of 1.1 mm was obtained in the same manner as in Example 1.

### (Comparative Example 4)

A melamine resin metal decorative panel having a thickness of 0.2 mm was obtained in the same manner as in Example 1 except that no metal layer material was used.

Properties of the melamine resin metal decorative panels obtained in Examples 1 to 6 and Comparative Examples 1 to 4 were evaluated.

Evaluation results are listed in Table 1.

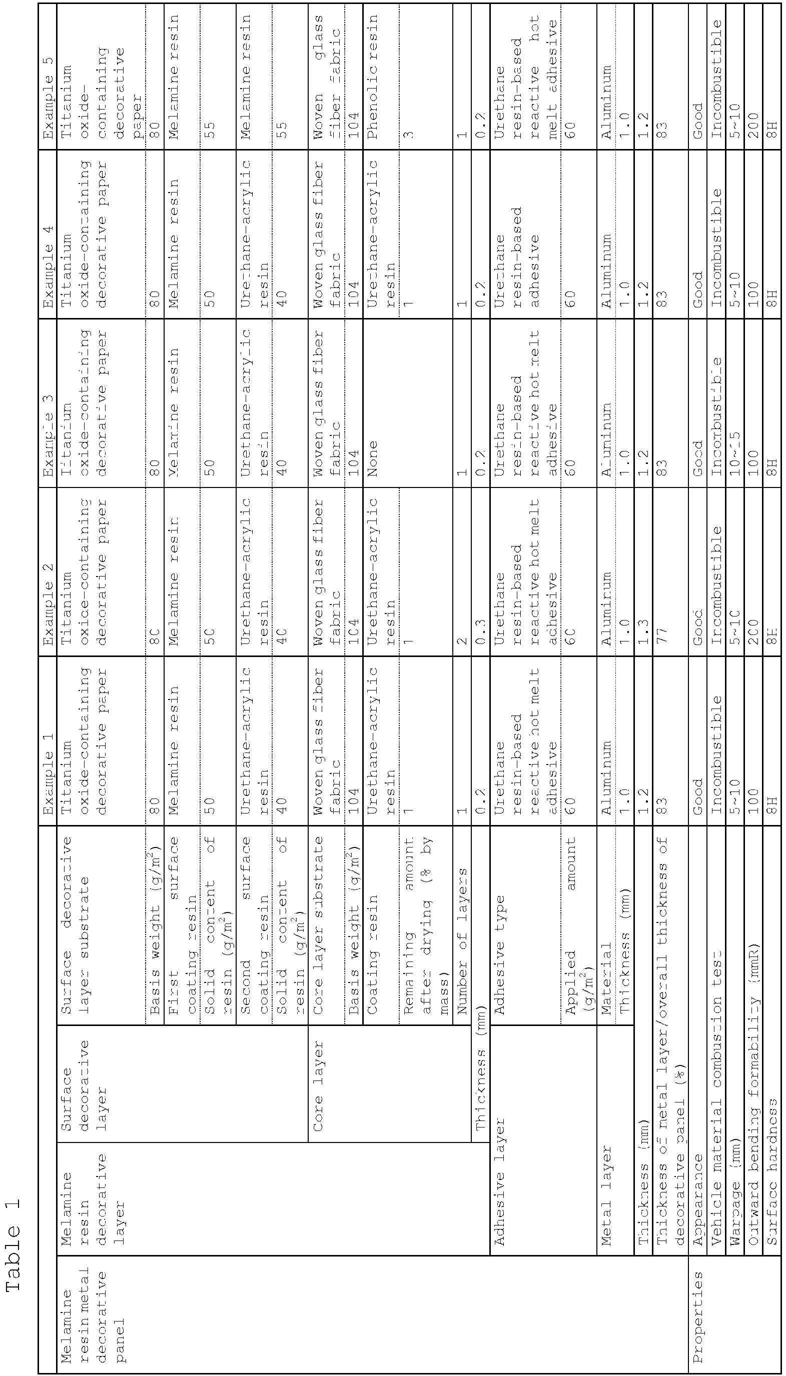

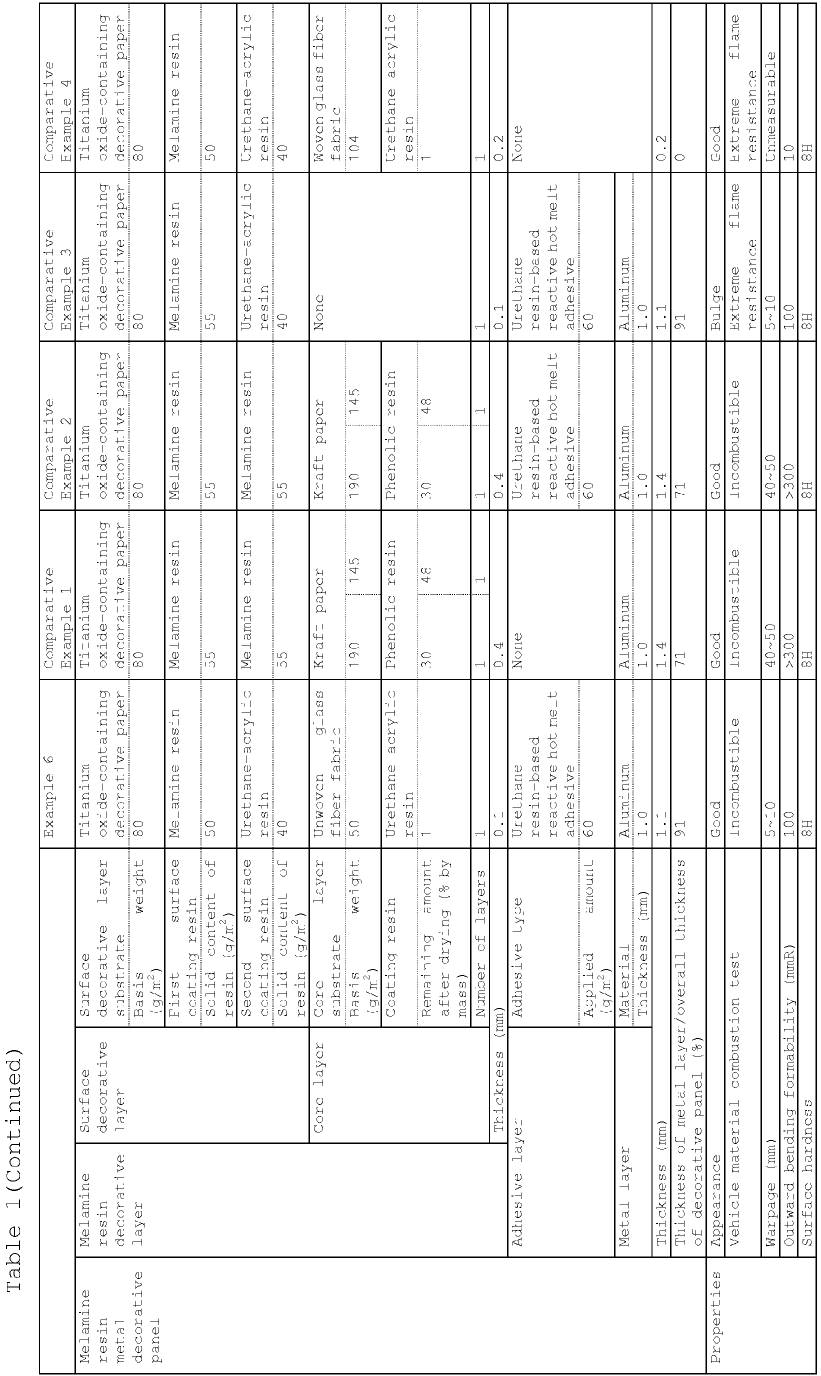

As apparent from the results illustrated in Table 1, the melamine resin metal decorative panels obtained in Examples 1 to 6 conform to incombustibility criteria and have satisfactory appearance, warpage, outward bending formability, and surface hardness.

On the contrary, the melamine resin metal decorative panels obtained in Comparative Examples 1 and 2 have satisfactory appearance, incombustibility, and surface hardness but are inferior in warpage and bending formability. In addition, the melamine resin metal decorative panel obtained in Comparative Example 3 is satisfactory in warpage, bending formability, and surface hardness but has inferior appearance and incombustibility. The melamine resin metal decorative panel obtained in Comparative Example 4 has satisfactory appearance, bending formability, and surface hardness but is inferior in warpage and incombustibility. In addition, since the melamine resin metal decorative panel obtained in Comparative Example 4 has smiling warpage and is warped to wind up, the warpage is not defined as a numerical value.

### (Test Methods)

### 1. Appearance

The presence or absence of a bulge or the like on the obtained melamine resin metal decorative panels was observed with the naked eye.

### 2. Material combustion test for vehicles of railroad (vehicle material combustion test)

The obtained melamine resin metal decorative panels were evaluated according to the "Material Combustion Test for Vehicles of Railroad" stipulated in Article 83 of the "Technical Regulatory Standards on Japanese Railways" (Ordinance No. 151 prescribed by the Ministry of Land, Infrastructure, Transport and Tourism on December 25, 2001).

### 3. Warpage

A 910 mm long x 1820 mm wide specimen cut from each of the obtained melamine resin metal decorative panels was subjected to treatment in an environment of a temperature of 40°C and a relative humidity of 95% for 16 hours and further to treatment in an environment of a temperature of 40°C and a relative humidity of 20% for 8 hours, after which the average value of the heights of warpages at the end portions was obtained.

### 4. Outward bending formability

Outward bending forming was carried out at a room temperature of 23°C and 100 mmR, 200 mmR and 300 mmR in accordance with the JIS K 6902 bending formability test (method A), after which the presence or absence of cracks on the surface of the decorative panels was identified. Minimum R at which no crack occurred was listed in Table 1. At 300 mmR or higher, a crack occurred on all of the decorative panels.

### 5. Surface hardness (pencil hardness) test

Evaluation was carried out by a pencil hardness test according to JIS K 5600.

According to the present invention, it is possible to obtain an incombustible melamine resin metal decorative panel which is capable of being easily bent outward and suppressing occurrence of warpage after being subjected to an environmental impact while maintaining the surface hardness of the melamine resin decorative panel. Accordingly, it is possible to choose melamine resin metal decorative panels in diverse colors and patterns as desired and to use melamine resin metal decorative panels for a wide range of applications, such as a ceiling and a wall of vehicles, which are restricted to using incombustible materials.

The present application claims priority based on Japanese Patent Application No. 2013-060498 filed on March 22, 2013, the entire disclosure of which is incorporated herein.

## Claims

1. A melamine resin metal decorative panel formed by sequentially stacking a melamine resin decorative layer having a surface decorative layer and a core layer, an adhesive layer, and a metal layer,
wherein the surface decorative layer is formed using a surface decorative layer material which includes a surface decorative layer substrate obtained by coating at least a first surface which is a design surface with a resin containing a melamine resin, and
the core layer is formed using a core layer material containing a chemical fiber substrate.

2. The melamine resin metal decorative panel according to claim 1, wherein the thickness of the metal layer is equal to or higher than 55% of the thickness of the entire melamine resin metal decorative panel.

3. The melamine resin metal decorative panel according to claim 1 or 2, wherein the metal layer has a thickness of equal to or less than 3 mm.

4. The melamine resin metal decorative panel according to any one of claims 1 to 3, wherein the melamine resin decorative layer has a thickness of equal to or less than 0.4 mm.

5. The melamine resin metal decorative panel according to any one of claims 1 to 4, wherein the chemical fiber substrate contained in the core layer material is a glass fiber substrate.

6. The melamine resin metal decorative panel according to claim 5, wherein the glass fiber substrate is a woven glass fiber fabric.

7. The melamine resin metal decorative panel according to any one of claims 1 to 6, wherein the metal layer is formed using a metal material containing aluminum.

8. The melamine resin metal decorative panel according to any one of claims 1 to 7, wherein the adhesive layer is formed using a urethane resin-based adhesive.

9. The melamine resin metal decorative panel according to claim 8, wherein the urethane resin-based adhesive is a urethane resin-based reactive hot melt adhesive.

10. The melamine resin metal decorative panel according to any one of claims 1 to 9, wherein the surface decorative layer is formed using a surface decorative layer material that includes a surface decorative layer substrate obtained by coating a first surface which is a design surface with a resin containing a melamine resin and coating a second surface in contact with the core layer with a thermoplastic resin.

11. The melamine resin metal decorative panel according to claim 10, wherein the thermoplastic resin contains an acrylic resin and a urethane resin.

12. The melamine resin metal decorative panel according to claim 10 or 11, wherein the thermoplastic resin contains a solid component of a thermoplastic emulsion resin.

13. The melamine resin metal decorative panel according to claim 12, wherein the solid component of the thermoplastic emulsion resin contains emulsion resin particles with an average particle diameter of equal to or greater than 30 nm and equal to or less than 100 nm.

14. The melamine resin metal decorative panel according to claim 12 or 13, wherein the solid component of the thermoplastic emulsion resin is water-insoluble.

15. The melamine resin metal decorative panel according to any one of claims 10 to 14, wherein the thermoplastic resin contains urethane-acrylic composite particles having a hetero-phase structure of an acrylic resin and a urethane resin in a single particle.

16. The melamine resin metal decorative panel according to claim 15, wherein the urethane-acrylic composite particles are an aqueous clear type having a core-shell structure in which an acrylic component is a core and a urethane component is a shell.

17. The melamine resin metal decorative panel according to any one of claims 1 to 16, wherein the surface hardness on the side of the melamine resin decorative layer is equal to or higher than 5H, which is measured by the pencil hardness test according to JIS K5600.

18. A method of manufacturing a melamine resin metal decorative panel that manufactures the melamine resin metal decorative panel according to any one of claims 1 to 17, the method comprising:
a step of preparing a surface decorative layer material which includes a surface decorative layer substrate obtained by coating at least a first surface which is a design surface with a resin containing a melamine resin;
a step of preparing a core layer material containing a chemical fiber substrate;
a step of preparing a melamine resin decorative layer material having a surface decorative layer and a core layer by stacking the surface decorative layer material and the core layer material and applying heat and pressure thereto;
a step of preparing a metal layer material; and
a bonding step of bonding the melamine resin decorative layer material to the metal layer material through an adhesive.

19. The method of manufacturing a melamine resin metal decorative panel according to claim 18, wherein the bonding step includes a step of applying the adhesive to the metal layer material.

20. The method of manufacturing a melamine resin metal decorative panel according to claim 19, wherein the adhesive is applied to the metal layer material using a roll coater.
